# EUROPEAN PATENT APPLICATION

(11) **EP 4 074 750 A1**
(43) Date of publication of application: **19.10.2022**
(21) Application number: 20899319.6
(22) Date of filing: 08.12.2020
(51) Int. Cl.: C08G 69/40, C08G 69/28

(54) **METHOD FOR PRODUCING POLYAMIDE**

(30) Priority: 11.12.2019 JP 2019223973
(71) Applicant: MITSUBISHI GAS CHEMICAL COMPANY, INC., Chiyoda-ku Tokyo 100-8324 (JP)
(72) Inventor: KIMURA, Ryutaro, Tokyo 125-8601 (JP); KIRINO, Tomoaki, Tokyo 125-8601 (JP)
(74) Representative: Müller-Boré & Partner Patentanwälte PartG mbB
(86) International application number: PCT/JP2020/045611
(87) International publication number: WO 2021/117703

(57) **Abstract**

A method for producing a polyamide excellent in appearance after heating is provided. The method for producing a polyamide contains the heating of a composition including a diamine represented by a formula (1), a dicarboxylic acid and a solvent, removing the solvent during and after the heating of the composition or after the heating of the composition, and adding a basic compound and/or a base generating agent to the composition during the heating of the composition and/or before the heating:
wherein X is a hetero atom, and n is an integer of 0 to 5. The ring portion including X represents a cyclic structure including X.

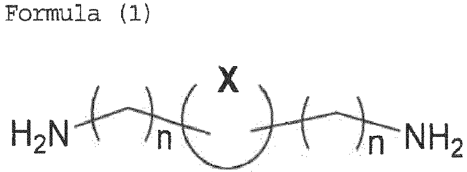

## Description

### [Technical Field]

The present invention relates to a method for producing a polyamide.

### [Background Art]

Due to increasing problems of global warming and exhaustion of petroleum resources, use of biomass plastics attracts attention from the viewpoint of global environment preservation. Examples of the biomass plastics include polylactic acid and polybutylene succinate, and recently bio polyethylene and the like have been developed. However, these biomass plastics have poor heat resistance with a melting point of less than 180°C. Although use of an aromatic monomer or an alicyclic monomer is effective as a method of increasing the heat resistance of plastics, the types of aromatic monomers and alicyclic monomers derived from biomass are limited. Among them, a polyamide using 2,5-bis(aminomethyl)tetrahydrofuran obtained from biomass has been recently studied (Non Patent Literature 1).

### [Citation List]

### [Non Patent Literature]

[Non Patent Literature 1]
Advanced Technologies for Chemicals from Wood Resources, CMC Publishing Co., Ltd., first edition published on August 31, 2007

### [Summary of Invention]

### [Technical Problem]

However, it cannot be said that characters and improvement of polyamides using 2,5-bis(aminomethyl)tetrahydrofuran as raw material diamine have been sufficiently studied. In particular, as a result of study by the present inventors, it has been found that polyamides using 2,5-bis(aminomethyl)tetrahydrofuran as raw material diamine have poor appearance after heating in some cases.

An object of the present invention is to solve the problem. In other words, an object of the present invention is to provide a method for producing a polyamide excellent in appearance after heating.

### [Solution to Problem]

As a result of study by the present inventors to solve the problem, it has been found that the problem can be solved by a polycondensation reaction between a diamine such as 2,5-bis(aminomethyl)tetrahydrofuran and a dicarboxylic acid in the presence of a basic compound.

Specifically, the problem is solved by the following means.
<1> A method for producing a polyamide comprising heating a composition including a diamine represented by a formula (1), a dicarboxylic acid and a solvent; and removing the solvent during and after the heating of the composition or after the heating of the composition, wherein a basic compound and/or a base generating agent are added to the composition during the heating of the composition and/or before the heating, the formula (1) being as follows: 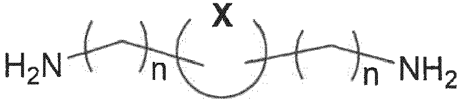 wherein X is a hetero atom, n is an integer of 0 to 5, and the ring portion including X represents a cyclic structure including X.
<2> The method for producing a polyamide according to item <1>, wherein the basic compound and/or the base generating agent is added to the composition during the heating of the composition.
<3> The method for producing a polyamide according to item <1> or <2>, wherein the diamine represented by the formula (1) includes a diamine represented by a formula (2): 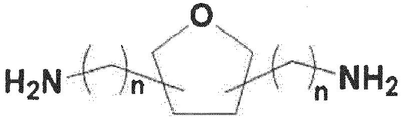 wherein n is an integer of 0 to 5.
<4> The method for producing a polyamide according to item <1> or <2>, wherein the diamine represented by the formula (1) includes 2,5-bis(aminomethyl)tetrahydrofuran.
<5> The method for producing a polyamide according to any one of items <1> to <4>, wherein a molar ratio between the diamine and the dicarboxylic acid included in the composition is given by: 0.8<diamine/dicarboxylic acid<1.2.
<6> The method for producing a polyamide according to any one of items <1> to <5>, wherein the basic compound is added to the composition.
<7> The method for producing a polyamide according to any one of items <1> to <6>, wherein each of the basic compound and a basic compound generated from the base generating agent includes at least one selected from ammonia, an organic amine, a salt of ammonia and a weak acid, and a metal salt of a weak acid.
<8> The method for producing a polyamide according to item <7>, wherein each of the basic compound and a basic compound generated from the base generating agent includes at least one selected from ammonia and a metal salt of a weak acid.
<9> The method for producing a polyamide according to any one of items <1> to <8>, wherein when each of the basic compound and a basic compound generated from the base generating agent is dissolved at a concentration of 0.55 mmol/40 g of solvent into the solvent contained in the composition at 23°C, a solution having a pH of 7 to 11 is formed.
<10> The method for producing a polyamide according to any one of items <1> to <9>, wherein the basic compound and/or the base generating agent have a total amount of 0.1 to 100 mol relative to 100 mol of the dicarboxylic acid contained in the composition.
<11> The method for producing a polyamide according to any one of items <1> to <10>, wherein the dicarboxylic acid includes at least one selected from phthalic acid, isophthalic acid, terephthalic acid, glutaric acid, adipic acid and sebacic acid.
<12> The method for producing a polyamide according to any one of items <1> to <11>, further comprising heating under reduced pressure after the removing of the solvent.
<13> The method for producing a polyamide according to any one of items <1> to <12>, wherein the composition has a value obtained by subtracting a pH of the basic compound and a basic compound generated from the base generating agent from a pH of the diamine represented by the formula (1) of 0.1 or more and 5 or less, the pH being a pH of a solution formed when the basic compound, a basic compound generated from the base generating agent or the diamine represented by the formula (1) is dissolved at a concentration of 0.55 mmol/40 g of solvent into the solvent contained in the composition at 23°C.

### [Advantageous Effect of Invention]

According to the present invention, a method for producing a polyamide excellent in appearance after heating can be provided.

### [Description of Embodiment]

The present invention is described in detail as follows. In the present specification, "to" is used such that numerical values described in front and behind thereof are included as a lower limit and an upper limit, respectively.

In the present specification, measured values, various physical properties and characteristic values are those at 23°C unless otherwise stated.

In the present specification, "part by mass" represents a relative amount of a component and "mass%" represents an absolute amount of a component.

In the present specification, a polyamide before solid phase polymerization is referred to as prepolymer, distinguished from polyamide after solid phase polymerization in some cases. When simply referred to as polyamide, the term includes both of a prepolymer and a polyamide after solid phase polymerization.

A method for producing a polyamide of the present invention (hereinafter, simply referred to as "production method of the present invention" in some cases) comprises heating a composition including a diamine represented by a formula (1), a dicarboxylic acid and a solvent (hereinafter, referred to as "monomer composition" in some cases), removing the solvent during and after the heating of the composition or after the heating of the composition, wherein a basic compound and/or a base generating agent are added to the monomer composition during the heating of the monomer composition and/or before the heating. 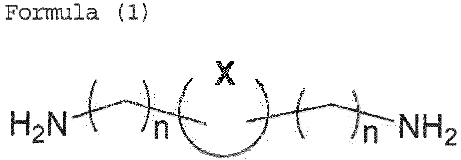 wherein X is a hetero atom, and n is an integer of 0 to 5. The ring portion including X represents a cyclic structure including X.

Through such a constitution, a polyamide excellent in appearance after heating can be obtained. More specifically, the change of yellowness index (ΔYI) can be maintained low.

The mechanism is presumed as follows, though not being preoccupied therewith. That is, a diamine represented by the formula (1) includes a cyclic structure containing a hetero atom typified by a tetrahydrofuran ring. In the cyclic structure containing a hetero atom, it is conceivable that a proton tends to be coordinated to the hetero atom. In the present invention, it is presumed that the proton is trapped by a basic compound, so that the coordination of proton to the cyclic structure containing a hetero atom is suppressed and concurrently the protonation of the amino group that the diamine represented by the formula (1) has is suppressed, allowing the nucleophilicity of the amino group to be maintained. As a result, it is presumed that the amidation easily proceeds.

Further, in the production method of the present invention, a polyamide having high 5% mass reduction temperature can be obtained through more precise examination of the type of the basic compound.

The production method of the present invention is described in detail as follows.

The production method of the present invention comprises the heating of a composition including a diamine represented by a formula (1), a dicarboxylic acid and a solvent (hereinafter, also referred to as "monomer composition"), and removing the solvent during and after the heating of the composition or after the heating. 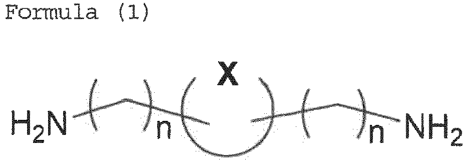 wherein X is a hetero atom, and n is an integer of 0 to 5. The ring portion including X represents a cyclic structure including X.

First, the diamine represented by the formula (1), which is contained in the monomer composition, is described.

In the formula (1), X is a nitrogen atom, an oxygen atom or a sulfur atom, preferably an oxygen atom or a sulfur atom, and more preferably an oxygen atom.

In the formula (1), the ring portion including X is preferably a hetero ring composed of one hetero atom and 2 to 8 carbon atoms, more preferably a hetero ring composed of one hetero atom and 3 to 5 carbon atoms, and still more preferably a hetero ring composed of one hetero atom and 4 carbon atoms. The hetero ring may be an aromatic ring or a non-aromatic ring, and a non-aromatic ring is preferred.

Specific examples of the ring structure including X include a furan ring, a tetrahydrofuran ring, a thiophene ring, and a tetrahydrothiophene ring. A furan ring and a tetrahydrofuran ring are preferred, and a tetrahydrofuran ring is more preferred.

In the formula (1), n each independently is preferably 1 or 2, and more preferably 1.

The diamine represented by the formula (1) is preferably a diamine represented by a formula (2): 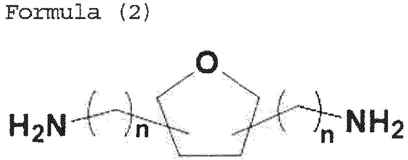 wherein n is an integer of 0 to 5.

In the formula (2), n has the same meaning as n in the formula (1), and the preferred range thereof is the same.

Further, the diamine represented by the formula (1) is preferably 2,5-bis(aminomethyl)tetrahydrofuran.

The monomer composition may include only one type of diamine represented by the formula (1), or may include two or more types.

The monomer composition may include a diamine other than the diamine represented by the formula (1) in the range without departing from the spirit of the present invention. Examples of the diamine other than the diamine represented by the formula (1) include an aliphatic diamine (including an alicyclic diamine) and an aromatic diamine.

As specific examples of the aliphatic diamine, the description in paragraph 0016 of International Publication No. WO 2016/056340 may be taken into consideration, and the content is incorporated in the present specification. As the aromatic diamine, the description in paragraph 0052 of International Publication No. WO 2017/126409 may be taken into consideration, and the content is incorporated in the present specification.

Also, examples of the other diamine include 2,5-bis(aminomethyl)furan.

In the present invention, in the diamines included in the monomer composition, the ratio of the diamine represented by the formula (1) is preferably 90 mass% or more, more preferably 95 mass% or more, and still more preferably 99 mass% or more, and may be substantially 100 mass%. "Substantially 100 mass%" means that the diamine other than diamines unintentionally included such as impurities is the diamine represented by the formula (1).

The dicarboxylic acid included in the monomer composition is described as follows.

The type of the dicarboxylic acid included in the monomer composition is not particularly prescribed, and known dicarboxylic acids may be widely used. An aromatic dicarboxylic acid and/or an aliphatic dicarboxylic acid are preferred, and an aromatic dicarboxylic acid is more preferred.

Examples of the aliphatic dicarboxylic acid include succinic acid, glutaric acid, adipic acid, pimelic acid, suberic acid, azelaic acid, sebacic acid, dodecane dicarboxylic acid, 4,4'-methylenebis(2-methylcyclohexane-1-carboxylic acid), 4,4'-methylenebis(cyclohexane-1-carboxylic acid), decahydro-1,4-naphthalene dicarboxylic acid, 4,4'-oxobis(cyclohexane-1-carboxylic acid), and 4,4-thiobis(cyclohexane-1-carboxylic acid). Among them, succinic acid, glutaric acid, adipic acid, pimelic acid, suberic acid, azelaic acid, sebacic acid, and dodecane dicarboxylic acid are preferred, and glutaric acid, adipic acid, and sebacic acid are more preferred.

Examples of the aromatic dicarboxylic acid include isophthalic acid, terephthalic acid, orthophthalic acid, 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid. Among these, isophthalic acid and terephthalic acid are more preferred, and terephthalic acid is still more preferred.

In particular, in the present invention, it is preferable that the dicarboxylic acid included in the monomer composition include at least one selected from phthalic acid, isophthalic acid, terephthalic acid, glutaric acid, adipic acid and sebacic acid, and terephthalic acid is more preferred.

The monomer composition may include only one type of dicarboxylic acid, or may include two or more types.

Here, the molar ratio between the diamine and the dicarboxylic acid (ratio A/C) in the monomer composition for use in the present invention has a lower limit of preferably 0.8<A/C, and more preferably 1.0≤A/C, which may be 1.0<A/C. Further, the upper limit of the ratio A/C is preferably A/C<1.2. Within the range less than the upper limit, the heat resistance (5% mass reduction temperature) can be more enhanced, while the appearance of the polyamide after heating is more improved.

The monomer composition for use in the present invention may include a raw material monomer to compose the polyamide other than the diamine and the dicarboxylic acid. Specific examples include a lactam such as ε-caprolactam, valerolactam, laurolactam and undecalactam, and an aminocarboxylic acid such as 11-aminoundecanic acid and 12-aminododecanic acid. In the monomer composition for use in the present invention, the total ratio of the diamine and the dicarboxylic acid among the raw material monomers to become the constituent units of the polyamide (raw material monomers such as diamine, dicarboxylic acid, lactam, and aminocarboxylic acid) is preferably 70 mass% or more, more preferably 80 mass% or more, still more preferably 90 mass% or more, further preferably 95 mass% or more, furthermore preferably 98 mass% or more, and still furthermore preferably substantially 100 mass%. Substantially 100 mass% means that all other than raw material monomers unintentionally included such as impurities is the diamine or the dicarboxylic acid.

The solvent included in the monomer composition is described as follows. A known solvent may be employed as the solvent without departing from the spirit of the invention. Examples thereof include water, methanol and ethanol, and water is preferred.

The ratio of the solvent in the monomer composition for use in the present invention is, for example, 20 to 80 mass%. The water content in the solvent in the monomer composition for use in the present invention is preferably 90 mass% or more, and may be 95 mass% or more, or 99 mass% or more.

The monomer composition for use in the present invention may include only one type of solvent, or may include two or more types. In the case where two or more types are included, it is preferable that the total amount is in the range described above.

The monomer composition for use in the present invention may include other components such as additives usually used in synthesis of a polyamide other than the above. Specific examples thereof include a reaction accelerator, an antioxidant, a catalyst, a dye, a pigment, a chain limiter, a lubricant, a flame retardant, a photo stabilizer, a plasticizer, and a nucleating agent, which do not fall under the basic compound and the base generating agent. Further, examples of the other components also include sodium acetate and calcium acetate for preventing gelation or fisheyes. The total amount of the other components in the monomer composition is preferably 3 parts by mass or less, and more preferably 1 part by mass or less, relative to 100 parts by mass of the raw material monomers included in the monomer composition.

In the production method of the present invention, the heating of the monomer composition and removing the solvent during and after the heating of the composition or after the heating are described as follows.

In the present invention, through the heating of the monomer composition, a diamine and a dicarboxylic acid are polymerized usually in a melted state into a low-molecular weight polyamide (prepolymer) . The removing of the solvent is performed during or after the heating of the composition, or after the heating, and it is preferable that the removing be performed after the heating. Further, it is preferable that the water from condensation reaction be removed together with the solvent when removing the solvent. The removal of the solvent is performed by discharging the solvent from a reaction system (for example, a reaction container) to outside of the system. In the production method of the present invention, even in the case where removal of the solvent is performed after the heating, the water from condensation reaction may be removed in the heating.

Here, heating means applying heat, which also includes maintaining a high-temperature state, though temperature usually rises by applying heat.

The heating temperature of the monomer composition in the stage of obtaining a prepolymer has a maximum heating temperature of preferably 150°C or more, more preferably 180°C or more, and still more preferably 190°C or more. With a temperature controlled to the lower limit or more, the degree of polymerization can be increased, while the discoloration of the prepolymer is more effectively suppressed. Further, the heating temperature of the monomer composition is preferably 260°C or less, more preferably 250°C or less, still more preferably 230°C or less, and further preferably 220°C or less. With a temperature controlled to the upper limit or less, the discoloration of the prepolymer can be more effectively suppressed.

The heating time is preferably 0.5 hours or more, and more preferably 1 hour or more, and the upper limit of the heating time is preferably 4 hours or less, and more preferably 3 hours or less.

The monomer composition may be pressurized during heating in the stage of obtaining the prepolymer, and the pressure in this case is preferably 0.1 MPa or more. With a pressure controlled to the lower limit or more, formation of the prepolymer made of diamine and dicarboxylic acid can proceed more effectively. Further, the pressure is preferably 5 MPa or less.

In the production method of the present invention, adding a basic compound and/or a base generating agent (preferably a basic compound) to a monomer composition during the heating the monomer composition and/or before the heating (preferably during the heating of the monomer composition) is described as follows.

In the production method of the present invention, it is presumed that adding a basic compound allows amidation to proceed easily as described above.

On the other hand, in the production method of the present invention, the base generating agent is a compound that generates a basic compound when subjected to stimulation such as heat. It is therefore presumed that adding a base generating agent also generates a basic compound during heating the monomer composition, which allows amidation to proceed easily as described above.

It is preferable that the basic compound and a basic compound generated from a base generating agent for use in the present invention (hereinafter, also referred to as "basic compound or the like") have a basicity weaker than that of the diamine represented by the formula (1), though not particularly prescribed. Specifically, the value obtained by subtracting the pH of the basic compound or the like from the pH of the diamine represented by the formula (1) is preferably 0.1 or more, and more preferably 0.2 or more. The upper limit of the value obtained by subtracting the pH of the basic compound or the like from the pH of the diamine represented by the formula (1) is preferably 5 or less, more preferably 4 or less, still more preferably 3 or less, further preferably 2 or less, and furthermore preferably 1 or less. The pH, here, is a pH of the solution formed when the basic compound or the like or the diamine represented by the formula (1) is dissolved at a concentration of 0.55 mmol/40 g of solvent into the solvent contained in the monomer composition at 23°C. Also, in the case of using two or more types of diamines represented by the formula (1), the pH is a pH of the mixture of these basic compounds. Further, in the case of using two or more types of the basic compound and/or a basic compound generated from a base generating agent, the pH is a pH of the mixture of these basic compounds. Since the basic compound or the like has a weaker basicity than the diamine represented by the formula (1), it is presumed that a salt of the diamine represented by the formula (1) and the dicarboxylic acid is preferentially formed, and the basic compound can effectively trap surplus protons. In particular, by controlling the upper limit of the difference between the pH of the diamine represented by the formula (1) and the pH of the basic compound or the like to 2 or less, ΔYI after heating further decreases, and the 5% mass reduction temperature tends to further increase.

Further, it is preferable that the basic compound or the like for use in the present invention have a pH of 7 to 11. The pH, here, is a pH of a solution formed when the basic compound or the like is dissolved at a concentration of 0.55 mmol/40 g of solvent into the solvent contained in the monomer composition at 23°C. Such a constitution allows the coordination of a proton to a furan ring to be more effectively suppressed, while maintaining the nucleophilicity of the amino group.

The basic compound or the like is preferably selected from ammonia, an organic amine, a salt of ammonia and weak acid, and a metal salt of weak acid, more preferably selected from metal salts of ammonia and weak acid, and still more preferably ammonia.

Also, through use of ammonia, an organic amine or a salt of ammonia and weak acid (further, ammonia or a salt of ammonia and weak acid, particularly ammonia), a polyamide more excellent in heat resistance can be obtained. Specifically, a polyamide having higher 5% mass reduction temperature can be obtained. In particular, even in the stage of prepolymer, high 5% mass reduction temperature can be achieved.

It is preferable that the organic amine be selected from a trialkyl amine, a dialkyl amine and a monoalkylamine. Each of the alkyl groups to constitute the alkylamine has preferably 1 to 10 carbon atoms, more preferably 1 to 5 carbon atoms, and still more preferably 1 to 3 carbon atoms.

Examples of the weak acid for use in the salt of ammonia and weak acid include carbonic acid and acetic acid, and acetic acid is preferred.

On the other hand, examples of the weak acid for use in the metal salt of weak acid include carbonic acid and acetic acid, and acetic acid is preferred. Further, as the metal for use in the metal salt of weak acid, an alkali metal and an alkaline earth metal are preferred, an alkali metal is more preferred, lithium, sodium and potassium are still more preferred, and potassium is further preferred.

The total amount of the basic compound and/or the base generating agent relative to 100 mol of dicarboxylic acid contained in the monomer composition is preferably 0.1 mol or more, and more preferably 0.3 mol or more, and may be 1 mol or more, or 5 mol or more. With the total amount controlled to the lower limit or more, the resulting polyamide has a more improved appearance and tends to have more improved degree of polymerization. On the other hand, the upper limit of the total amount of the basic compound and/or the base generating agent relative to 100 mol of dicarboxylic acid contained in the monomer composition is preferably 100 mol or less, more preferably 60 mol or less and still more preferably 15 mol or less. With the total amount controlled to the upper limit or less, a prepolymer having higher 5% mass reduction temperature tends to be obtained.

Only one type or two or more types of the basic compound and the base generating agent may be used, respectively. In the case of using two or more types, it is preferable that the total amount be in the range described above.

Here, preferred physical properties of the prepolymer are described.

The prepolymer is a polymer having two or more amide bonds, and has a weight average molecular weight of usually 3000 or more, preferably 5000 or more, and usually 20000 or less, and more preferably 15000 or less.

The number average molecular weight of the prepolymer is usually 2000 or more, preferably 3000 or more, and usually 10000 or less, and more preferably 8000 or less.

The lower limit of the 5% mass reduction temperature of the prepolymer is, for example, 260°C or more, preferably 340°C or more, more preferably 350°C or more, still more preferably 360°C or more, and further preferably 380°C or more. The upper limit of the 5% mass reduction temperature of the prepolymer is, for example, 410°C or less, and may be 400°C or less. Such high mass reduction temperature can be effectively obtained by using ammonia, an organic amine or a salt of ammonia and weak acid as the basic compound or the like. In particular, use of ammonia as the basic compound or the like is effective.

The 5% mass reduction temperature of the prepolymer is measured by the method described in Examples described later.

In the method for producing a polyamide of the present invention, the prepolymer may be used directly as polyamide, or may be further heated. In the case of using the prepolymer directly as polyamide, the prepolymer may be subjected to purification for use.

In the method for producing a polyamide of the present invention, it is preferable that after the removing of the solvent by heating the monomer composition, heating be further performed under reduced pressure. In the present invention, by heating the prepolymer under reduced pressure (preferably under vacuum), additional polymerization proceeds, so that a polyamide having a larger molecular weight (polyamide after solid phase polymerization) can be obtained.

The heating temperature of the prepolymer (heating temperature during solid polymerization) has a maximum heating temperature of preferably 220°C or more, more preferably 230°C or more, still more preferably 240°C or more, and further preferably 245°C or more. With a maximum heating temperature controlled to the lower limit or more, the late stage polycondensation (solid phase polymerization) of the prepolymer tends to proceed more effectively. Further, the heating temperature of the prepolymer is preferably 300°C or less, more preferably 280°C or less, still more preferably 270°C or less, and further preferably 260°C or less. With the heating temperature controlled to the upper limit or less, the degeneration and discoloration can be more effectively suppressed.

The heating time of the prepolymer is preferably 0.25 hours or more, and more preferably 0.5 hours or more. Also, the upper limit of the heating time is preferably 5 hours or less, and more preferably 3 hours or less.

Preferred physical properties of the polyamide after solid phase polymerization obtained by the production method of the present invention are described as follows.

The weight average molecular weight of the polyamide after solid phase polymerization obtained by the production method of the present invention is preferably 30000 or more, more preferably 40000 or more, and may be 50000 or more, or 60000 or more. The weight average molecular weight is, for example, 300000 or less, and may be 200000 or less or 150000 or less.

The number average molecular weight of the polyamide after solid phase polymerization obtained by the production method of the present invention is preferably 5000 or more, more preferably 8000 or more, still more preferably 10000 or more, and may be 11000 or more, or 13000 or more. Further, the number average molecular weight is, for example, 50000 or less, and may be 30000 or less, or 20000 or less.

The degree of dispersion (Mw/Mn) of the polyamide after solid phase polymerization obtained by the production method of the present invention may be 1.5 or more, or 2.0 or more. With a degree of dispersion controlled to the lower limit or more, the resulting polyamide tends to have higher mechanical strength. The degree of dispersion (Mw/Mn) of the polyamide after solid phase polymerization is preferably 10.0 or less, more preferably 8.0 or less, and still more preferably 6.0 or less. With a degree of dispersion controlled to the upper limit or less, the heat resistance is high due to less oligomers, and the formability tends to be improved.

The weight average molecular weight and the number average molecular weight are measured by the method described in Examples described later.

The 5% mass reduction temperature of the polyamide after solid phase polymerization obtained by the production method of the present invention is preferably 371°C or more, more preferably 380°C or more, still more preferably 385°C or more, and further preferably 390°C or more. With a 5% mass reduction temperature controlled to the lower limit or more (in particular, 390°C or more), the polyamide is suitable for the use requiring heat resistance. The upper limit of the 5% mass reduction temperature of the polyamide after solid phase polymerization is, for example, 410°C or less, though not particularly prescribed, and may be 400°C or less.

The 5% mass reduction temperature is measured by the method described in Examples described later.

The change of yellowness index (ΔYI) of the polyamide after solid phase polymerization obtained by the production method of the present invention is preferably 30 or less, more preferably 20 or less, still more preferably 15 or less, further preferably 13 or less, and furthermore preferably 12 or less. With a ΔYI controlled to the upper limit or less, a formed article with further suppressed coloring can be obtained. The lower limit of the ΔYI of the polyamide after solid phase polymerization is, for example, practically 1 or more, though not particularly prescribed, and even a ΔYI of 5 or more allows the required performance to be sufficiently satisfied.

The ΔYI is measured by the method described in Examples described later.

The polyamide after solid phase polymerization obtained by the production method of the present invention satisfies preferably at least one of the weight average molecular weight, the number average molecular weight, the degree of dispersion, the 5% mass reduction temperature, and the change of yellowness index (ΔYI), more preferably two or more of them, and still more preferably all of them.

The use of the polyamide obtained by the production method of the present invention is described as follows.

The polyamide obtained by the production method of the present invention can be used as a resin composition including the polyamide, and as a formed article formed from the resin composition.

Details of the resin composition, the forming method of a formed article, the use of a formed article, etc., may be referred to descriptions in paragraphs 0026 to 0040 in Japanese Patent Laid-Open No. 2019-026686, paragraph 0039 in Japanese Patent Laid-Open No. 2018-165298, and paragraphs 0045 to 0048 in Japanese Patent Laid-Open No. 2018-087319, and the contents thereof are incorporated into the present specification.

### [Examples]

The present invention is further specifically described with reference to Examples as follows. The material, the amount used, the ratio, the processing, the processing procedure, etc., shown in the following Examples may be appropriately changed without departing from the spirit of the present invention. Accordingly, the scope of the present invention is not limited to the specific examples shown below.

### <Synthesis example of 2,5-bis(aminomethyl)tetrahydrofuran>

An autoclave reaction container having a capacity of 300 cc was charged with 20.70 g (0.1641 mol) of weighed 2,5-bis(aminomethyl)furan (FB187031801 manufactured by Carbosynth Limited), 120 mL of tetrahydrofuran, and 8.00 g of Rh catalyst-containing product (317-160042 manufactured by N. E. CHEMCAT Corporation), and after sufficiently purging with nitrogen, charged with hydrogen up to 6 MPaG. After a reaction at 90°C for 1 hour, the reaction solution was taken out from the reaction container and subjected to pressurized filtration under an Ar atmosphere. The product was subjected to solvent distillation to obtain a crude product, which was then subjected to distillation purification by distillation under a reduced pressure of 1 hPa at 130°C to obtain 2,5-bis(aminomethyl)tetrahydrofuran.

The Rh catalyst-containing product includes powder of Rh catalyst supported on carbon, containing 55 mass% of water and 45 mass% of a Rh catalyst. The Rh catalyst contains 5 mass% of Rh and 40 mass% of carbon.

It is noted that, when the 2,5-bis(aminomethyl)tetrahydrofuran was dissolved in pure water at a concentration of 0.55 mmol/40 g of pure water at 23°C, the pH of the solution was 11.01.

### Example 1

### <Synthesis of polyamide>

An autoclave reaction container having a capacity of 30 cc was charged with 0.712 g (3.08 mmol) of weighed terephthalic acid (PTM6633 manufactured by FUJIFILM Wako Pure Chemical Corporation), 0.60 g of pure water, 0.472 g (3.08 mmol) of the synthesized 2,5-bis(aminomethyl)tetrahydrofuran, and 15 µL of 7 mass% ammonia water (prepared from special grade ammonia water (ammonia: 28 mass%) manufactured by Kishida Chemical Co., Ltd.), and after sufficient purging with nitrogen, heated to 200°C while stirring the inside of the system. After one and a half hours, the water produced and the water charged were removed to the outside of the system, and heating was continued for further 30 minutes. After the reaction, the prepolymer was taken out from the reaction container, and subjected to late stage polycondensation (solid phase polymerization) for 1 hour in a vacuum dryer at 250°C to obtain polyamide.

### <5% Mass reduction temperature>

Each of the prepolymer and the polyamide after solid phase polymerization obtained in the synthesis example was subjected to measurement of the 5% mass reduction temperature. Specifically, the prepolymer or the polyamide after solid phase polymerization to be measured was heated at a heating rate of 10.5°C/minute from 30°C to 400°C. An aluminum disc was used as reference. The initial sample mass was defined as 100%, and the temperature when the mass was reduced to 95% was defined as the 5% mass reduction temperature. The unit used is °C.

In the measurement, TGDTA7220 manufactured by Hitachi High-Tech Science Corporation was used.

### <Change of yellowness index (ΔYI)>

Using hexafluoroisopropanol as solvent, 42.5 mg of the polyamide after solid phase polymerization was dissolved in 60 mL of the solvent to control the concentration to the same level for all, so that a sample solution was obtained. The yellowness indexes (YI) of the solvent and the sample solution were obtained, and the difference in the yellowness indexes between the sample solution and the solvent was defined as change of yellowness index (ΔYI).

In the measurement, Spectro Color Meter SE 2000 manufactured by Nippon Denshoku Industries Co., Ltd., was used.

### <Measurement of weight average molecular weight (Mw) and number average molecular weight (Mn)>

The measurement of Mw and Mn of the polyamide after the solid phase polymerization was performed by gel permeation chromatography. Specifically, to 10 mg of polyamide after solid phase polymerization to be measured, 5 mL of 1,1,1,3,3,3-hexafluoroisopropanol was added, and the mixture was filtered with a membrane filter (pore diameter: 0.2 µm) to prepare a sample solution.

In the measurement, GPC-104 (with use of RI detector) manufactured by Shoko Scientific Co., Ltd., was used. As the column, Shodex GPC LF-404 manufactured by Showa Denko K.K. was used. The gel permeation chromatography apparatus and the column for use may be replaced with other equipment having the equivalent performance when the apparatus or the like is unavailable due to discontinued production or the like.

### Eluent: 1,1,1,3,3,3-hexafluoroisopropanol (+10 mmol of sodium trifluoroacetate)

Measurement conditions were as follows.
Flow rate: 0.3 mL/minute
Column temperature: 40°C
Standard substance: polymethyl methacrylate
Sample concentration: 0.2 mass/volume %
Injection volume: 10 µL

The degree of dispersion (Mw/Mn) was calculated from the values of Mw and Mn measured as described above.

Example 2, Example 3, Example 4, Example 5 and Comparative Example 1

The same procedure was performed as in Example 1, except that the type and amount added of the basic compound were changed as shown in Table 1. Into an autoclave reaction container, powder of potassium acetate 166-03172 manufactured by FUJIFILM Wako Pure Chemical Corporation was directly fed together with terephthalic acid, 2,5-bis(aminomethyl)tetrahydrofuran and pure water.

The results are shown in the following Table 1.

**[Table 1]**

| | | Example 1 | Example 2 | Example 3 | Example 4 | Example 5 | Comparative Example 1 |
|---|---|---|---|---|---|---|---|
| Basic compound | Type | Ammonia | Ammonia | Ammonia | Potassium acetate | Potassium acetate | Without addition |
| | Addition amount (amount relative to 100 mol of dicarboxylic acid) | 2mol% | 10mol% | 46mol% | 10mol% | 46mol% | Without addition |
| | pH given when 0.55 mmol is dissolved in 40 g of water at 23°C | 10.63 | 10.63 | 10.63 | 7.47 | 7.47 | |
| 5% Mass reduction temperature [°C] | Prepolymer | 391 | 393 | 366 | 311 | 270 | 336 |
| | After solid phase polymerization | 397 | 396 | 391 | 386 | 372 | 370 |
| ΔYI | | 5.56 | 5.61 | 5.02 | 9.25 | 17.7 | 41.64 |
| Molecular weight after solid phase polymerization | Mw | | | 60,575 | | | 48,833 |
| | Mn | | | 14,241 | | | 7,793 |
| | Mw/Mn | | | 4.25 | | | 6.3 |

## Claims

1. A method for producing a polyamide, comprising:
heating a composition including a diamine represented by a formula (1), a dicarboxylic acid and a solvent; and
removing the solvent during and after the heating of the composition or after the heating of the composition,
wherein a basic compound and/or a base generating agent are added to the composition during the heating of the composition and/or before the heating, the formula (1) being as follows: 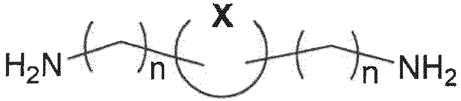 wherein X is a hetero atom, n is an integer of 0 to 5, and the ring portion including X represents a cyclic structure including X.

2. The method for producing a polyamide according to claim 1, wherein the basic compound and/or the base generating agent is added to the composition during the heating of the composition.

3. The method for producing a polyamide according to claim 1 or 2, wherein the diamine represented by the formula (1) includes a diamine represented by a formula (2): 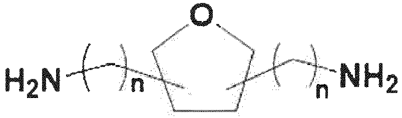 wherein n is an integer of 0 to 5.

4. The method for producing a polyamide according to claim 1 or 2, wherein the diamine represented by the formula (1) includes 2,5-bis(aminomethyl)tetrahydrofuran.

5. The method for producing a polyamide according to any one of claims 1 to 4, wherein a molar ratio between the diamine and the dicarboxylic acid included in the composition is given by: 0.8<diamine/dicarboxylic acid<1.2.

6. The method for producing a polyamide according to any one of claims 1 to 5, wherein the basic compound is added to the composition.

7. The method for producing a polyamide according to any one of claims 1 to 6, wherein each of the basic compound and a basic compound generated from the base generating agent includes at least one selected from ammonia, an organic amine, a salt of ammonia and a weak acid, and a metal salt of a weak acid.

8. The method for producing a polyamide according to claim 7, wherein each of the basic compound and a basic compound generated from the base generating agent includes at least one selected from ammonia and a metal salt of a weak acid.

9. The method for producing a polyamide according to any one of claims 1 to 8, wherein when each of the basic compound and a basic compound generated from the base generating agent is dissolved at a concentration of 0.55 mmol/40 g of solvent into the solvent contained in the composition at 23°C, a solution having a pH of 7 to 11 is formed.

10. The method for producing a polyamide according to any one of claims 1 to 9, wherein the basic compound and/or the base generating agent have a total amount of 0.1 to 100 mol relative to 100 mol of the dicarboxylic acid contained in the composition.

11. The method for producing a polyamide according to any one of claims 1 to 10, wherein the dicarboxylic acid includes at least one selected from phthalic acid, isophthalic acid, terephthalic acid, glutaric acid, adipic acid and sebacic acid.

12. The method for producing a polyamide according to any one of claims 1 to 11, further comprising heating under reduced pressure after the removing of the solvent.

13. The method for producing a polyamide according to any one of claims 1 to 12, wherein the composition has a value obtained by subtracting a pH of the basic compound and a basic compound generated from the base generating agent from a pH of the diamine represented by the formula (1) of 0.1 or more and 5 or less, the pH being a pH of a solution formed when the basic compound, a basic compound generated from the base generating agent or the diamine represented by the formula (1) is dissolved at a concentration of 0.55 mmol/40 g of solvent into the solvent contained in the composition at 23°C.
